# EUROPÄISCHE PATENTANMELDUNG

(11) **EP 0 855 215 A2**
(43) Veröffentlichungstag der Anmeldung: **29.07.1998**
(21) Anmeldenummer: 98100357.7
(22) Anmeldetag: 12.01.1998
(51) Int. Cl.: B01J 8/16, B01J 19/28

(54) **Verfahren und Vorrichtung zur Verbesserung des Wärme- und/oder Stoffaustausch mittels eines Pulsators**

(30) Priorität: 23.01.1997 DE 19702202
(71) Anmelder: EBARA Germany GmbH, 63452 Hanau am Main (DE)
(72) Erfinder: Bruckamp, Jörg, 93053 Regensburg (DE); Kucharczyk, Adam, 93152 Undorf (DE); Schnitt, Georg, Dr., 93173 Wenzenbach (DE)
(74) Vertreter: Zapfe, Hans, Dipl.-Ing.

(57) **Zusammenfassung**

Wärme- und/oder Stoffaustausch werden in einem verfahrenstechnischen System durchgeführt, das einen mit einer Zufuhrleitung (4) versehenen Behälter (1a, 1b) aufweist, der Medien unterschiedlichen Aggregatszustandes enthält. Den Medien werden mittels eines Pulsators (9a, 9b) Pulsationen aufgezwungen. Dem Behälter (1a, 1b) ist ein in der Zufuhrleitung (4) des fluiden Mediums zum Behälter (1a, 1b) liegendes Sperrorgan (8) vorgeschaltet, das den Eintritt der Pulsationen in die Zufuhrleitung (4) zumindest weitgehend verhindert. Zur Verbesserung des Wärme- und/oder Stoffaustauschs, werden:
a) die Pulsationen dem Haupstrom des Fluids aufgezwungen,
b) die Pulsationsfrequenz wird maximal der halben Resonanzfrequenz des Systems nach Maßgabe der Raumform des Behälters (1a, 1b), der Temperatur und der Eigenschaften der Medien gewählt, und
c) die Antinode (Schwingungsbauch) der sich ausbildenden stehenden Welle wird zumindest angenähert in der Behältermitte eingestellt.
Dadurch wird im Behälter kein Schwingungsknoten ausgebildet. Vorzugsweise wird die Pulsationsfrequenz zu 1/4 der Resonanzfrequenz des Systems gewählt.

## Beschreibung

Die Erfindung betrifft ein Verfahren zur Verbesserung des Wärme- und/oder Stoffaustauschs in einem verfahrenstechnischen System mit einem mit einer Zufuhrleitung versehenen Behälter, der Medien unterschiedlichen Aggregatszustandes enthält, von denen mindestens ein Medium ein fluides Medium ist, wobei dem mindestens einen fluiden Medium mittels eines Pulsators Pulsationen aufgezwungen werden, und wobei dem Pulsator ein in der Zufuhrleitung des fluiden Mediums zum Behälter liegendes Sperrorgan vorgeschaltet ist, das den Eintritt der Pulsationen in die Zufuhrleitung zumindest weitgehend verhindert.

Unter dem Ausdruck "fluide Medien" oder "Fluid" werden im Rahmen dieser Erfindung alle tropfbaren Flüssigkeiten sowie alle Gase und Dämpfe verstanden, von denen in der Detailbeschreibung etliche Beispiele genannt sind. Solche Medien sind unbeschränkt deformierbar.

Fast alle wärmeübertragenden Fluide enthalten bestimmte Mengen an gelösten oder suspendierten Stoffen, die den Wärmeübertragungsprozeß durch mehr oder weniger stabile Ablagerungen im Apparat beeinflussen. Da die Wärmeleitfähigkeit solcher Schichten meistens sehr gering ist, entsteht dadurch ein zusätzlicher Wärmeübergangswiderstand, was eine Verschlechterung des Wirkungsgrades des Prozesses zur Folge hat. Das führt zum Bau von überdimensionierten Apparaten oder zur Anwendung von speziellen technischen Mitteln, um der verschmutzungsbedingten Verschlechterung des Wirkungsgrades vorzubeugen. Es ist bekannt, daß Apparate mit höheren Durchflußturbulenzen und niedrigeren Heizflächentemperaturen weniger zur Ablagerungsbildung neigen. Dadurch erhöht sich jedoch der Druckverlust in den Apparaten.

Es sind mehrere mechanische Verfahren bekannt, die zur Verbesserung des Wirkungsgrades entwickelt wurden, z.B.:
- Umkehr der Strömungsrichtung
- spezielle Heizflächen (Platten-Wärmetauscher)
- Reinigung mit Bürsten
- Wirbelschichtwärmeübertrager etc.

Der Wirbelschichtwärmeübertrager, welcher aus der Literatur bekannt ist, hat nur einen begrenzten Anwendungskreis gefunden. Er besitzt die Vorteile einer Wärmeübertragung in der Wirbelschicht, wobei er allerdings Feststoffpartikel benötigt, deren abrasive Wirkung die Heizfläche reinigt.

Durch die DE 36 19 716 C1 ist es bekannt, eine Waschvorrichtung für mit Fremdstoffen beladenes Schüttgut Oszillationsbewegungen auszusetzen, indem entweder eine rotierende Schnecke in einem Rohr in oszillierende Bewegungen versetzt wird, oder ein mit Schneckengängen versehenes Rohr selbst. Dies geschieht über eine Hydrauliksteuerung, die nicht nur die genannten Anlagenteile, sondern auch den Inhalt des Rohres in entsprechende Bewegungen versetzen muß, die Beschleunigungswerte bis zum Zwanzigfachen der Erdbeschleunigung (20 g) erzeugen sollen. Dies erfordert enorme Antriebskräfte und setzt die mechanischen Vorrichtungsteile hohen Belastungen aus.

Durch einen Prospekt der Firma SCHOTT Glaswerke, Mainz, "Verfahrenstechnische Reihe Nr. 6410d, "EXTRAKTION"", sind pulsierende Extraktionskolonnen bekannt, in denen pulsierende Siebböden und/oder Füllkörper eingesetzt werden, um den Wärme- und Stoffaustausch zu verbessern. Auch hierbei sind erhebliche Massenkräfte zu überwinden.

Durch den Prospekt "INFRAFONE" der Firma Infrasonik AB, Schweden ist es bekannt, Verbrennungsräumen zur Rußentfernung Infraschallgeneratoren zuzuordnen, die unter genauer Einhaltung von Resonanzbedingungen mit Frequenzen um 20 Hz arbeiten. Die Resonanzbedingungen werden jedoch in einem rohrförmigen Wellenleiter erzeugt, der die Abmessungen der Vorrichtungen beträchtlich vergrößert. Es ist auch angegeben, daß mit derartigen Systemen Überhitzer, Wärmetauscher und elektrostatische Abscheider betrieben werden können. Der Reinigungsbereich entspricht dabei der Wellenlänge und beträgt bei 20 Hz etwa 17 Meter, bei 250 bis 400 Hz etwa 1 Meter. Bei den zuletzt genannten Frequenzen treten jedoch unangenehme Geräuschbelästigungen auf. Die Schallausbreitung erfolgt auch rückwärts durch die Zufuhrleitungen.

Durch einen weiteren Prospekt der gleichen Firma mit dem Titel "INFRAFONE Granules Heater/Cooler" vom 8. Mai 1991 ist es weiterhin bekannt, den Partikeln durch ein Regelsystem (feed-back) Infraschallschwingungen mit etwa 20 Hz und eine stehende Welle Bewegungen aufzuzwingen, die auf einem Träger ein fluidisiertes Bett erzeugen, dessen Partikel mit Heiz- oder Kühlrohren in Berührung gebracht werden. Hierfür werden jedoch zur Erzeugung der Resonanz zwei rohrförmige Wellenleiter beträchtlicher Länge benötigt, die die Höhenabmessungen der Vorrichtung vervielfachen.

Durch den VDI-Wärmeatlas, 7. Auflage, 0c 16/0c 17, "Verschmutzung von Wärmeübertragerflächen" ist es weiterhin bekannt, mit Hilfe von akustischen Signalen Rußablagerungen zu entfernen, um einem "Fouling-Effekt" vorzubeugen.

Durch den Aufsatz von Franke "Wärmeübergang und Geschwindigkeitsverlauf bei pulsierender Rohrströmung", veröffentlicht in "ALLGEMEINE WÄRMETECHNIK" 1961, Heft 3, Seiten 49 bis 59, ist es bekannt, den Wärmeübergang durch Erhöhung der stationären Geschwindigkeit zu verbessern, und zwar bei gegebenem Durchsatz durch Verringern des Rohrdurchmessers. Dieser Vorschlag läßt sich jedoch in großtechnischem Maßstab bei Behältern nicht ohne weiteres verwirklichen, da dadurch unvertretbar lange oder hohe Behälter entstehen würden. Soweit die Überlagerung von Impulsen angegeben ist, wird dies empfohlen, um die laminaren Randströmungen oder "Unterschichten" abzulösen. Trotz umfangreicher Versuche mit einer aufwendigen Versuchsapparatur kommt der Autor nicht zu der Erkenntnis, daß Resonanzfrequenzen des Systems als solches, d.h. die Behältergeometrie, die Temperatur und die Stoffeigenschaften der Medien und die Lage der Antinode im System berücksichtigt werden müssen.

Durch die DE 195 08 895 C1 ist ein Hohlfadensystem für Wärme- und Stoffaustauschzwecken bei Fluiden bekannt, das auf medizinischem Gebiet eingesetzt werden soll, beispielsweise zur Dialyse, Hämodialyse, Hämofiltration, Hämodifiltration, Oxygenation von Blut, Gasseparation, Mikrofiltration, Nano- und/oder Ultrafiltration. Mittel zur Beseitigung oder Verhinderung von Ablagerungen auf oder in den extrem engen Hohlfäden sind ebenso wenig angegeben wie Mittel zur Verbesserung des Wärmeübergangs und/oder des Stoffaustauschs zwischen unterschiedlichen Komponenten.

Durch die DE-PS 858 539 ist es bei Eindickern für Suspensionen bekannt, das Filterelement wie z.B. Filtertuch, u.a. durch mechanische Pulsationen oder Ultraschall zu bewegen und von Ablagerungen zu befreien, wobei ein Schallgeber im Innern des Filterelements liegen muß. Frequenzen und/oder die Abstimmung des Systems auf systemeigene Resonanzen oder Bruchteile davon sind nicht angegeben. Damit sind große zu bewegende Flächen und Massen, hohe Antriebsleistungen und ein schlechter Wirkungsgrad verbunden.

Durch die DE-AS 19 22 196 ist ein kontinuierlich arbeitender Pulsationsfiltereindicker bekannt, bei dem auf beiden Seiten eines Filterelements mittels zweier Pulsationskammern entweder im Gleichtakt oder im Gegentakt Druckstöße und Druckschwingungen erzeugt werden, die zu einer Reinigung des Filterelements führen. Frequenzen und/oder die Abstimmung des Systems auf systemeigene Resonanzen oder Bruchteile davon sind auch hier nicht angegeben. Damit sind große zu bewegende Flüssigkeitsmengen und entsprechend hohe Antriebsleistungen erforderlich. Einem schlechten Wirkungsgrad soll durch Strahldüsen entgegengewirkt werden, die zur Abspülung des Filterkuchens auf die Filteroberfläche ausgerichtet sind. Es sind auch keine Mittel vorgesehen, um die Druckstöße von den Zu- und Ableitungen fernzuhalten.

Durch die DE 34 11 471 A1 ist es bekannt, bei der kontinuierlichen Druckfiltration mittels eines im wesentlichen konstanten Überdrucks zur Erhaltung der Filtrationsleistung einen besonderen Retentatkreislauf vorzusehen, in dem die Abhängigkeit von der Filterverstopfung, gemessen durch Druck und/oder Druckflußmenge, durch ein ferngesteuertes Drosselglied intermittierend oder stetig-repetierend, periodisch oder aperiodisch negative Druckstöße erzeugt werden, die eine zeitlich begrenzte Strömungsumkehr zur Folge haben, durch die der Filterkuchen in den Retentatkreislauf zurückgespült und aus diesem ausgetragen werden. Die Filterelemente, z.B. Schläuche oder Membranen, müssen jedoch elastische Wände aufweisen, die durch die Druckstöße verformt werden.

Die Druckstöße können durch einen systemunabhängigen Taktgeber mit Zeitsteuerung oder unter Einbeziehung eines systemimmanenten Regelkreises druck- und/oder durchflußabhängig ausgelöst werden. Die Steuer- und Regelprozesse werden jedoch nur als "sekundär erfindungswesentlich" bezeichnet. Als "primär erfindungswesentlich" wird die Verformungsbewegung der Filteroberfläche im Filtratraum bezeichnet. Zur Verhinderung einer rückwärtigen Fortpflanzung der Druckstöße in die Zufuhrleitung der Trübe ist in dieser ein Rückschlagventil angeordnet.

Als weiteres wesentliches Moment zur Unterdrückung der Filterbelegung ist eine relativ hohe Strömungsgeschwindigkeit der Trübe an der Membranoberfläche bzw. Filteroberfläche als notwendig angegeben. Bezüglich der Frequenz ist beispielhaft angegeben, daß jeweils nach 15 bis 30 Minuten Filtrationsbetrieb dem Retentatkreislauf für 3 bis 5 Minuten ein periodischer Druckimpuls von 5 bis 50 Hz aufgeprägt wird. Hierfür kann in den Retentatablauf ein Vibrationsgenerator eingeschaltet sein, der Frequenzen zwischen 0,5 Hz und 100 kHz, vorzugsweise zwischen 1 Hz und 10 kHz erzeugt. Während des Filtrationsbetriebes, dessen Dauer gemäß den obigen Zeitangaben zeitlich absolut überwiegt, erfolgt also kein Stoffaustausch durch Pulsation. Es ist insbesondere nicht angegeben, daß sich die Pulsationsfrequenz an der Eigenfrequenz des Systems, der sogenannten Resonanzfrequenz, orientieren soll, um im Filter selbst eine ununterbrochene stehende Welle zu erzeugen, bei der zur Erhaltung der Oszillation nur die Reibungsverluste ausgeglichen werden müssen.

Vielmehr wird weiterhin als besonders vorteilhaft angegeben, daß die Pulsationen durch ein Dämpfungsglied ausschließlich auf der trübseitigen Filteroberfläche und im Retentatkreislauf als Retentatpulsation auftreten sollen, damit mit Sicherheit unerwünschte Schwebungen, Interferenzen und Resonanzkopplungen in den Filterkammern ausgeschlossen werden können, die dem angestrebten Zweck zuwiderlaufen würden. Es soll vielmehr ein "gedämpft glatter Zulaufdruck" bei der Filtration vorliegen. Insbesondere soll das Filtrat unter einem konstanten Überdruck gehalten werden, der größer ist als die Druckminima der Retentatpulsung.

Nun enthält diese Schrift auch die Angabe, daß das pulsierende Drosselglied im Retentatkreislauf auch durch eine peristaltische (=pulsende) Schlauchpumpe ersetzt werden kann, damit das Retentat innerhalb eines relativ breiten Frequenzbereichs kontinuierlich gepulst werden kann. Aber auch damit wird nur die Retentat-Kreislaufströmung erreicht, und diese soll nach dem Gesamtinhalt der Schrift nur gering sein. Bei einem Durchsatz von 2.200 l/h und einem Filtratabzug von 2.100 l/h werden nur 100 l/h im Retentatkreislauf umgewälzt und mit Impulsen beaufschlagt, also weniger als 5 %. Der Rest von 95 %, insbesondere das Filtrat, wird also keinen Pulsationen ausgesetzt, so daß sich dieses System nicht für einen Wärmetauscher eignet und auch nicht für einen evtl. weiteren Stoffaustausch auf der Filtratseite. Das ganze bekannte System ist auf Filter mit elastischen bzw. flexiblen Filterwänden beschränkt.

Schließlich ist noch zu berücksichtigen, daß gemäß den obigen Pausen-und Impulszeitenverhältnissen auch die geringe Menge des Retentats nur etwa 20 bis 30 % seiner Verweilzeit im I<reislauf einer Pulsation ausgesetzt werden soll, die Einwirkungsdauer auf die geringe Menge von etwa 5 % also entsprechend gering ist. Es mag bei Filtervorgängen keine Rolle spielen, daß das gereinigte und schnell strömende Filtrat die Apparatur verlassen hat, bevor auch nur ein einziger Impuls auf dieses eingewirkt hat. Bei Anwendung bei einem kontinuierlichen Wärme- und Stoffaustausch ist ein solches Verhalten schlicht untolerierbar, so daß der Fachmann auch dieser Schrift keine Anregungen für das erfindungsgemäße Verfahren entnehmen kann.

Die beschriebenen Verfahren und Vorrichtungen berücksichtigen nicht das Resonanzsystem, bestehend aus der Behältergeometrie und dem Behälterinhalt nach Dichte und Temperatur der miteinander in Wechselwirkung stehenden Medien sowie gegebenenfalls vorhandene Füllkörper und andere Einbauten.

Der Erfindung liegt daher die Aufgabe zugrunde, ein Verfahren der eingangs beschriebenen Gattung anzugeben, mit dem bei geringem Energie- und Apparateaufwand und kleinstmöglichem Apparatevolumen ein intensiver Wärme- und/oder Stoffaustausch möglich ist, bei dem keine großen Apparateteile bewegt werden müssen und bei dem auch die Ansammlung von Ablagerungen weitgehend verhindert oder aufgelöst wird. Auch soll es möglich sein, bereits bestehende Anlagen ohne großen Aufwand nachzurüsten.

Die Lösung der gestellten Aufgabe erfolgt bei dem eingangs angegebenen Verfahren erfindungsgemäß dadurch, daß
a) die Pulsationen dem Hauptstrom des Fluids aufgezwungen werden,
b) die Pulsationsfrequenz maximal der halben Resonanzfrequenz des Systems nach Maßgabe der Raumform des Behälters der Temperatur und der Eigenschaften der Medien gewählt wird und
c) die Antinode (der Schwingungsbauch) der sich ausbildenden stehenden Welle zumindest angenähert in der Behältermitte eingestellt wird.

Im Gegensatz zu den bekannten technischen Lösungen erfordert das erfindungsgemäße System keine zusätzlichen Wellenleiter. Der Pulsator wird an der Zufuhrleitung nach einem Sperrorgan eingebaut, was erheblich Platz spart. Dabei ist die Schwingungsfrequenz so zu wählen und während des Prozesses so zu regeln, daß die Antinode der entstehenden stehenden Welle in der Nähe der Mitte des Behälters liegt und die Frequenz eine Unterresonanzfrequenz des Systems ist.

Es hat sich auch gezeigt, daß es mittels Vibration der fluiden Medien zur Beschleunigung des Masse- und Stoffaustauschprozesses kommt und gleichzeitig die Reinigung der Grenzflächen und/oder eine Minderung der Staubfracht zu erreichen ist. Im Gegensatz zu den bekannten Lösungen ist das erfindungsgemäße System kompakt und es läßt sich auch in die vorhandenen Anlagen unter Beibehaltung von schon vorhandenen Vibrationseigenschaften (Resonanzfrequenz) integrieren.

Das Verfahren ist geeignet, um mit Hilfe einer Durchströmung mit pulsierendem Gas Feststoffe wie z.B. Schüttgüter zu trocknen und/oder zu dekontaminieren und besitzt im Vergleich zur Wirbelschichttechnik bei vergleichbarer technischer Wirkung folgende Vorteile:
1. wesentlich kleinere mechanische Beanspruchung der behandelten Stoffe,
2. geringere Staubbildung und damit geringere Beanspruchung von z.B. Ventilatoren mit Staub.

Weitere Vorteile der Behandlung von Schüttgütern im pulsierenden thermischen Feld unter Voraussetzung desselben thermischen Effektes im Vergleich zur Wirbelschichttechnik, z.B. beim Trocknen und bei einer Dekontamination, sind:
3. sehr geringe, nur thermisch bedingte Prozeßgasmengen im Vergleich mit der Wirbelschichttechnik,
4. kleinere Gasbehandlungsanlagen im Vergleich zur Wirbelschichttechnik,
5. niedrigerer Energiebedarf pro Masseneinheit des behandelten Materials,
6. geringere Korngrößenreduzierung, z.B. bei der Aktivkohleproduktion und -regenerierung,
7. Anwendbarkeit für Prozesse, bei welchen die mechanische Belastung des behandelten Materials möglichst gering bleiben sollte.

Das genannte Verfahren belastet bei vergleichbarer technischer Wirkung die Umwelt geringer als die Wirbelschichtverfahren, weil es einen geringeren Einsatz von Energie erfordert bei reduziertem Aufwand an Ausrüstungen.

Es ist dabei besonders vorteilhaft, wenn die Pulsationsfrequenz einen ganzzahligen Bruchteil der Resonanzfrequenz des Systems beträgt, insbesondere, wenn die Pulsationsfrequenz zu 1/4 der Resonanzfrequenz des Systems gewählt wird.

Als Sperrorgane kommen folgende Geräte in Betracht:
- Rückschlagventile,
- Blenden,
- Düsen und
- Verdrängerpumpen, beispielsweise Kolbenpumpen.

Als Pulsatoren kommen folgende Geräte in Betracht:
- Rotierende Drosselklappen, die auch jenseits des Behälters angeordnet sein können,
- Schnellschaltventile in Verbindung mit einer Druckquelle für das jeweilige Fluid,
- Verdrängerpumpen wie Kolbenpumpen, Rootspumpen,
- Verdrängerpumpen mit mindestens einem Ventil, das gleichzeitig als Sperrorgan dient.

Bei langgestreckten Behältern mit der Länge L ist es besonders vorteilhaft, wenn der pulsierende Innendruck des Behälters in dessen Längsmitte L/2 gemessen und wenn die Pulsationsfrequenz des Pulsators so eingestellt wird, daß die Antinode der sich ausbildenden stehenden Welle in der Längsmitte zumindest angenähert ein Maximum aufweist.

Beim Erfindungsgegenstand kommt es zu keinen nennenswerten Geräuschbelästigungen und nur zu geringstmöglichen mechanischen Beanspruchungen des Systems. Die mechanische Energiezufuhr dient nur zum Ausgleich mechanischer Verluste, z.B. durch Reibung im System. Solche Fluid-Reibungen treten beispielsweise auf in Schüttungen aus Füllkörpern und/oder Behandlungsgut und würden eine Dämpfung einer nicht weiter angeregten Schwingung herbeiführen. Nur diese Dämpfung ist durch Energiezufuhr zu kompensieren.

Die erforderliche positive oder negative Wärmeenergie (Heizung oder Kühlung) kann, wie beim Stande der Technik auch, durch den Hauptstrom des Fluids zugeführt oder abgeführt werden, z.B. durch Heißgas, Heißdampf, Kühlgas, Kühlwasser oder dergleichen. Additiv oder alternativ ist es möglich, auch Wärmetauschflächen der Vorrichtung in den Energieaustausch einzubeziehen, wie z.B. die Wandungen von Drehrohröfen, Kondensatoren etc..

Durch die Unterschreitung der Resonanzfrequenz treten bei einer stehenden Welle keine Schwingungsknoten innerhalb der Behälter auf; diese Schwingungsknoten liegen - theoretisch - diesseits und jenseits von Behälteranfang und Behälterende. Der Schwingungsbauch bzw. die Amplitude wird in Behältermitte gehalten, und die gesamte Fluidmenge strömt im Mittel kontinuierlich durch die stehende Welle hindurch, die den Fluidpartikeln an allen Stellen des Behälters infraphone Schwingungen aufzwingt, die den Wärme- und Stoffaustausch begünstigen. Die Pulsationen werden dem Hauptstrom des Fluids aufgezwungen, und die rückwärtige Ausbreitung der Pulsationen ist ausgeschlossen. Bei stehenden Fluiden wie z.B. beim Abkühlen von Regenerativ-Wärmetauschern ist natürlich gleichfalls ein Stoff- und Wärmeaustausch möglich.

Bei einem Regenerativ-Wärmetauscher mit Füllkörpern in einem stehenden Behälter ist es von Vorteil, wenn durch den Behälter zur Abkühlung der Füllkörper über das Sperrorgan ein Kühlfluid geführt wird, wenn dem Kühlfluid im unteren Bereich des Behälters jenseits des Sperrorgans Druckpulsationen zugeführt werden, bis eine ausreichende Abkühlung der Füllkörper erreicht ist, wenn anschließend die Zufuhr des Kühlmediums unterbrochen und die Füllkörper nachfolgend einem Prozeßmedium zu dessen Abkühlung ausgesetzt werden. Das Verfahren eignet sich besonders zur Kondensation dampfförmiger Prozeßmedien.

Bei Verwendung eines flüssigen Kühlfluids ist es besonders vorteilhaft, wenn das Kühlfluid nach Abkühlung der Füllkörper abgelassen wird.

Bei einem Rekuperativ-Wärmetauscher mit Wärmeaustauschflächen zwischen zwei fluiden Medien ist es besonders vorteilhaft, wenn dem fluiden Medium auf mindestens einer Seite der Wärmeaustauschflächen in Strömungsrichtung jenseits des Sperrorgans Druckpulsationen aufgezwungen werden.

Bei dem erfindungsgemäßen Einsatz in Wärmetauschern werden auch bei niedrigen Druckverlusten gute Wirkungsgrade und saubere Flächen bei niedrigen Temperaturen der Medien erreicht, was es erlaubt, die Apparate nicht mehr überdimensionieren zu müssen. Die bei der Kondensation erzeugte Pulsation wirkt positiv auf die Kondensattropfenbildung, besonders im Bereich von niedrigen Temperaturen, wodurch gleichzeitig für eine saubere Reaktionsfläche gesorgt wird.

Bei einem Reaktor mit einem Behälter für die Behandlung von Schüttgut mit einem gasförmigen fluiden Medium ist es besonders vorteilhaft, wenn dem gasförmigen Medium jenseits des Sperrorgans Druckpulsationen aufgezwungen werden, insbesondere wenn bei einem Drehrohrofen mit liegender Drehachse als Reaktor das Schüttgut und das pulsierende gasförmige Medium ständig durch den Behälter hindurchgeführt werden.

Durch den Einsatz von Pulsationen wird eine wesentliche Minderung der erforderlichen Inertgasmenge bei Drehrohröfen erreicht, sowie eine wesentliche Beschleunigung der Heiz-/Kühlphase und eine starke Minderung der Staubfracht aus den Öfen erzielt.

Die Erfindung betrifft auch eine Vorrichtung zur Durchführung des Verfahrens nach Anspruch 1, mit einem Behälter, mindestens einer Zufuhrleitung für mindestens ein fluides Medium, mit einem Pulsator für die Erzeugung von Pulsationen innerhalb des jeweiligen Mediums, und mit einem in der Zufuhrleitung des fluiden Mediums zum Behälter vor dem Pulsator liegenden Sperrorgan, durch das eine Rückwirkung der Pulsationen in die Zufuhrleitung zumindest weitgehend unterdrückbar ist.

Zur Lösung der gleichen Aufgabe ist eine solche Vorrichtung erfindungsgemäß dadurch gekennzeichnet, daß
a) der Pulsator im Hauptstrom des Fluids angeordnet ist,
b) dem Pulsator ein Regelgerät zugeordnet ist, durch das die Pulsationsfrequenz des Pulsators zumindest im wesentlichen auf einen ganzzahligen Bruchteil der Resonanzfrequenz des Systems nach Maßgabe der Raumform des Behälters, der Dichte, Beschaffenheit und Temperatur des Behälterinhalts einregelbar ist.

Dabei ist es besonders vorteilhaft, wenn an die Behältermitte ein Druckfühler angeschlossen ist, durch den über ein Steuergerät die Frequenz des Pulsators in der Weise regelbar ist, daß in dem Behälter eine stehende Welle mit Unterresonanzfrequenz und mit einer Antinode im wesentlichen in der Behältermitte erzeugbar ist.

Die Erfindung betrifft auch eine Vorrichtung zur Durchführung des Verfahrens, die als Regenerativ-Wärmetauscher mit einem Behälter mit Füllkörpern, mit einer ersten Zufuhrleitung und mit einer ersten Abfuhrleitung für ein Kühlfluid, mit einer zweiten Zufuhrleitung für ein zu kühlendes Prozeßmedium und mit einer zweiten Abfuhrleitung für das abgekühlte Prozeßmedium ausgebildet ist.

Zur Lösung der genannten Aufgabe ist eine solche Vorrichtung erfindungsgemäß derart ausgebildet, daß in der ersten Zufuhrleitung für das Kühlfluid ein Sperrorgan und in Strömungsrichtung jenseits des Sperrorgans ein Pulsator angeordnet ist, durch den das Kühlfluid im Behälter periodischen Pulsationen aussetzbar ist.

Die Erfindung betrifft auch eine weitere Vorrichtung zur Durchführung des Verfahrens, die als Rekuperativ-Wärmetauscher mit Wärmetauschflächen zwischen zwei Behälterräumen für jeweils ein fluides Medium und mit Zufuhrleitungen und Abfuhrleitungen für jeweils eines der fluiden Medien ausgebildet ist.

Zur Lösung der genannten Aufgabe ist eine solche Vorrichtung erfindungsgemäß derart ausgebildet, daß in mindestens einer der Zufuhrleitungen ein Sperrorgan und in Strömungsrichtung jenseits des Sperrorgans ein Pulsator angeordnet ist, durch den das fluide Medium innerhalb des Behälters periodischen Pulsationen aussetzbar ist.

Auch betrifft die Erfindung eine weitere Vorrichtung zur Durchführung des Verfahrens, die als Reaktor mit einem Behälter für die Behandlung von Schüttgut mit einem gasförmigen fluiden Medium, mit je einer Zufuhrleitung und einer Abfuhrleitung für das gasförmige Medium ausgebildet ist.

Wiederum zur Lösung der genannten Aufgabe ist eine solche Vorrichtung erfindungsgemäß derart ausgebildet, daß in der Zufuhrleitung ein Sperrorgan und in Strömungsrichtung jenseits des Sperrorgans ein Pulsator angeordnet ist, durch den das fluide Medium innerhalb des Behälters periodischen Pulsationen aussetzbar ist. Vorzugsweise ist der Reaktor als Drehrohrofen ausgebildet und mit je einer Zufuhrleitung und einer Abfuhrleitung für die kontinuierliche Durchleitung des Schüttguts durch den Behälter ausgestattet.

Es ist dabei im Zuge einer weiteren Ausgestaltung der Erfindung wiederum besonders vorteilhaft, wenn im Innenraum des Behälters mindestens ein Heizkörper angeordnet ist, durch den Heizenergie sowohl unmittelbar durch Strahlung als auch mittelbar durch pulsierende Konvektion auf den Behälterinhalt übertragbar ist.

Dies geschieht in besonders vorteilhafter Weise dadurch, daß
a) im Innenraum des Behälters mindestens ein Siebboden angeordnet ist, auf dem sich Schüttgut befindet,
b) auf einer Seite des Siebbodens, z.B. darunter, eine Zufuhrleitung für das Prozeßgas in den Behälter einmündet und auf der anderen Seite des Siebbodens, z.B. darüber, eine Abfuhrleitung aus dem Behälter herausführt,
c) auf beiden Seiten des Siebbodens im Behälterinnenraum mindestens je ein Heizkörper angeordnet ist, und daß
d) im Strömungsweg des Prozeßgases mindestens ein Pulsator aus der Gruppe Gaspumpe und rotierende Sperrklappe angeordnet ist.

Fünf Ausführungsbeispiele des Erfindungsgegenstandes werden nachfolgend anhand der Figuren 1 bis 6 näher erläutert.

Es zeigen:
- Figur 1: eine Batterie von zwei als Kondensatoren ausgebildeten Regenerativ-Wärmetauschem für alternierenden Betrieb,
- Figur 2: einen Rekuperativ-Wärmetauscher,
- Figur 3: einen als Drehrohrofen ausgebildeten Reaktor,
- Figur 4: einen vergrößerten Querschnitt durch einen Drehrohrofen analog Figur 3 zum kontinuierlichen Durchleiten von Schüttgut, z.B. zum Dekontaminieren von Adsorptionsmitteln wie Aktivkohle,
- Figur 5: eine Vorrichtung zur stationären bzw. chargenweisen Behandlung von Schüttgut, z.B. zum Dekontaminieren von Adsorptionsmitteln wie Aktivkohle, und
- Figur 6: ein Diagramm mit vergleichsweiser Darstellung von zeitabhängigen Aufheizzeiten nach dem Stande der Technik einerseits und nach der Erfindung andererseits.

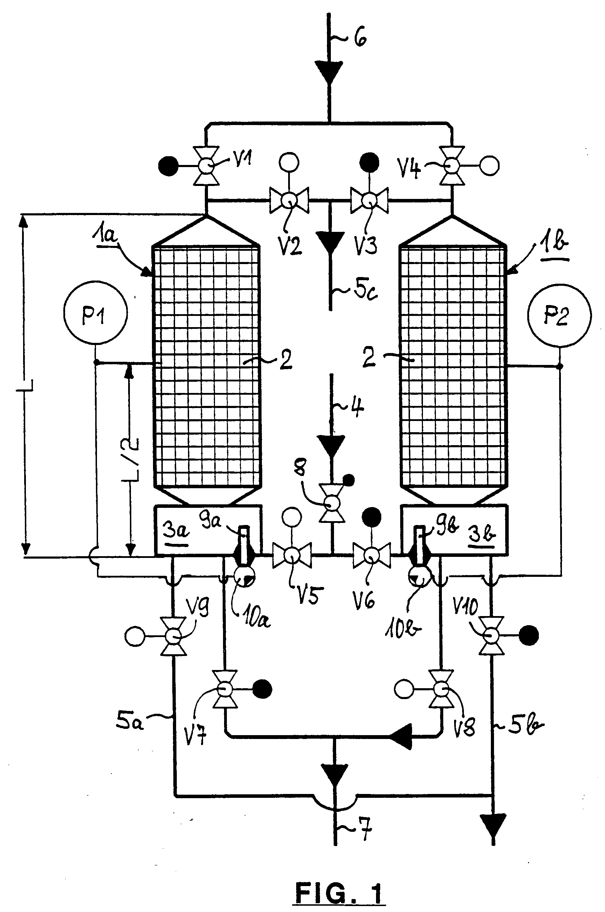

In Figur 1 sind zwei im wesentlichen zylindrische, senkrecht stehende Behälter 1a und 1b dargestellt, die mit Füllkörpern 2 in Form einer stationären Schüttung aus wärmespeichernden Kugeln gefüllt sind. Diese sind aus einem vorausgegangenen Prozeßzyklus aufgeheizt. Am unteren Ende befinden sich Sammelbehälter 3a und 3b für ein Kühlfluid, beispielsweise für kaltes Wasser, das in die Sammelbehälter 3a und 3b und in die Behälter 1a und 1b über eine erste Zufuhrleitung 4 einführbar ist. Das erwärmte Kühlfluid, das mit Feststoffpartikeln aus dem vorausgegangenen Prozeßzyklus versehen sein kann (Reinigungseffekt), ist nach dem Durchlauf durch den jeweiligen Behälter 1a oder 1b von unten nach oben über eine erste Abfuhrleitung 5c abziehbar. Die Durchflußgeschwindigkeit des Kühlfluids muß ausreichend sein, um in den Behältern 1a und 1b jeweils eine Fluidsäule zu bilden. Restmengen des Kühlfluids sind am Ende des Kühlzyklus aus den Behältern 1a und 1b bzw. aus den Sammelbehältern 3a und 3b über Leitungen 5a und 5b abziehbar.

Bei Verwendung von Gasen als Kühlfluid ist dies nicht erforderlich. Die Gase können über die Abfuhrleitung 5c abgezogen werden.

Am oberen Ende sind die Behälter an eine zweite Zufuhrleitung 6 für ein Prozeßmedium angeschlossen, und die Sammelkammern 3a und 3b sind an eine zweite Abfuhrleitung 7 für das abgekühlte Prozeßmedium angeschlossen. Im vorliegenden Falle also für das an den Füllkörpern 2 gebildete Kondensat. Ventile V1 bis V8 sind für die Umsteuerung der Anlage vorgesehen, und in der dargestellten Prozeßphase sind die Ventile V1, V3, V6 und V7 geschlossen, und die Ventile V2, V4, V5 und V8 geöffnet. Dies bedeutet, daß in dem linken Behälter 1a eine Rückkühlung der Füllkörper 2 durch das Kühlfluid erfolgt, während in dem rechten Behälter 1b eine Kondensation des Prozeßmediums an den zuvor abgekühlten Füllkörpern 2 erfolgt. In den Leitungen 5a und 5b sind weitere Ventile V9 und V10 angeordnet.

In der ersten Zufuhrleitung 4 befindet sich ein Drosselorgan 8, das im vorliegenden Fall als Rückschlagventil ausgebildet ist. In die Sammelbehälter 3a und 3b mündet jeweils ein Pulsator 9a und 9b, der in Strömungsrichtung gesehen, jeweils jenseits des Drosselorgans 8 angeordnet ist, so daß eine rückwärtige Ausbreitung der Druckstöße ausgeschlossen ist. Zu den Pulsatoren gehören frequenzgesteuerte Schnellschaltventile 10a und 10b.

Die Pulsatoren 9a und 9b sind elastisch und gedämpft an der Apparatur befestigt, so daß die erzeugten Pulsationen nur auf das Kühlfluid übertragen und mit diesem in die Behälter 1a und 1b eingetragen werden. Dies gilt auch für die nachstehend beschriebenen Ausführungsbeispiele.

Die Ausdrücke "diesseits" und "jenseits" beziehen sich jeweils auf den Bezugspunkt "Sperrorgan", und zwar bedeutet "diesseits" "strömungsaufwärts" und "jenseits" "strömungsabwärts" vom Sperrorgan. Dies gilt auch bei vorübergehend eingeschlossenem Behandlungsgut, d.h. bei Behandlung einer Charge.

Die Gesamthöhe eines jeden Behälters 1a und 1b hat einschließlich der Sammelbehälter 3a und 3b das Maß L. In halber Höhe L/2 ist an jeden Behälter ein Druckfühler P1 und P2 angeschlossen, der über jeweils ein (hier nicht gezeigtes) Steuergerät die Frequenz der Schnellschaltventile 10a und 10b so regelt, daß in den Behältern 1a und 1b eine stehende Welle mit Unterresonanzfrequenz und mit einer Antinode (einem Schwingungsbauch) in Behältermitte erzeugt wird. Pro Verfahrenszyklus sollten mindestens 100 Pulsationen auf das Kühlmedium übertragen werden, bevor die Anlage umgeschaltet wird.

Im vorliegenden Fall wird im linken Behälter 1a durch Druckpulsation des Pulsators 9a mittels des Kühlfluids eine Abkühlung der Füllkörper 2 durchgeführt. Im rechten Behälter 1b wird das kontinuierlich zugeführte Prozeßmedium abgekühlt bzw. kondensiert, und das Kondensat wird über das Ventil V8 und die Leitung 7 abgezogen. Es ist auch hierbei möglich, dem Prozeßmedium über den Pulsator 9b eine Druckpulsation mit einer stehenden Welle und einer Antinode in Behältermitte aufzuzwingen, um den Kondensationseffekt zu beschleunigen. Die Pulsationsfrequenz ist hierbei eine andere, da die Resonanzfrequenz nicht nur von der Behältergeometrie, sondern auch von den Eigenschaften des Prozeßmediums und seiner Temperatur abhängt. Die Pulsationen beschleunigen auch hier den Wärmeaustausch zwischen dem Prozeßmedium und den Füllkörpern und halten diese frei von Ablagerungen. Die Kondensattropfen mit größerer Oberflächenspannung fließen schneller zusammen, obwohl sich die Pulsationswelle in Gegenrichtung ausbreitet.

Nach Beendigung der in Figur 1 gezeigten Betriebsphase werden Ventile V1 bis V8 entsprechend umgeschaltet, so daß das Verfahren nunmehr seitenverkehrt bzw. spiegelsymmetrisch abläuft.

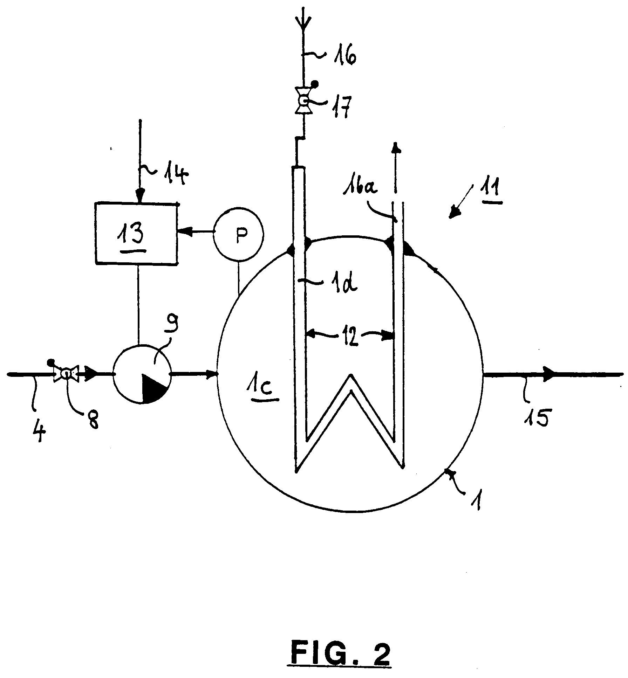

In Figur 2 ist ein Rekuperativ-Wärmetauscher 11 dargestellt. Im Behälter 1 sind beiderseits von Wärmetauschflächen 12 zwei Behälterräume 1c und 1d gebildet, die jeweils für die Durchleitung je eines fluiden Mediums vorgesehen sind. Ein primäres Medium wird durch die Zufuhrleitung 4 zugeführt, in der ein Drosselorgan 8 angeordnet ist, das gleichfalls als Rückschlagventil ausgebildet ist. In Strömungsrichtung ist dem Drosselorgan 8 ein Pulsator 9 nachgeschaltet, der gleichfalls als Schnellschaltventil ausgebildet ist. Dadurch werden im Behälterraum 1c Druckpulsationen mit Unterresonanzfrequenz erzeugt, die den Wärmeübergang verbessern, ohne daß die Druckstöße in die Zufuhrleitung 4 ausweichen könnten. An die Behältermitte ist auch hier ein Druckfühler P angeschlossen, der über ein Steuergerät 13 die Pulsationsfrequenz so regelt, daß eine Antinode in Behältermitte ausgebildet wird. Prozeßparameter wie die Behältergeometrie, Stoffeigenschaften und Temperatur, die die Resonanzfrequenz bestimmen, können über einen Steuereingang 14 eingegeben werden. Das primäre Medium wird über eine Abfuhrleitung 15 abgeführt.

Das sekundäre Medium wird durch den Behälterraum 1d geführt, der durch den Hohlraum einer Rohrschlange gebildet wird. In einer Zufuhrleitung 16 für das sekundäre Medium ist ein weiteres Drosselorgan 17 angeordnet, dem ein weiterer Pulsator in analoger Weise nachgeschaltet sein kann, wie dies analog in Figur 2, links, dargestellt ist. Dadurch wird auch im Innern des Behälterraums 1d eine frequenzgesteuerte Druckpulsation mit stehender Welle bzw. Unterresonanz erzeugt, die den Wärmeübergang verbessert. Das sekundäre Medium wird über eine Abfuhrleitung 16a abgeführt.

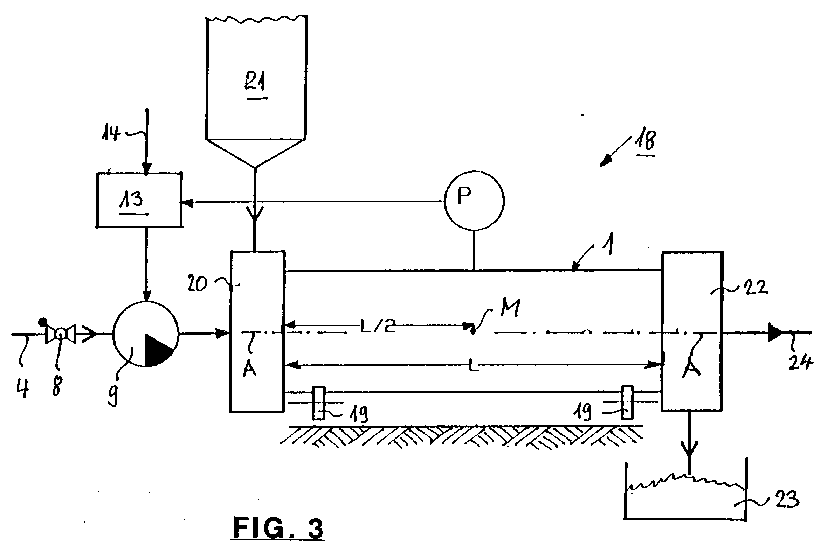

Figur 3 zeigt einen als Drehrohrofen 18 ausgebildeten Reaktor mit einem trommelförmigen Behälter 1, der um eine waagrechte oder schwach geneigte Achse A-A auf Rollen 19 drehbar gelagert ist. Einer Eintragsschleuse 20 ist ein Silo 21 für Schüttgut zugeordnet, und das behandelte Schüttgut wird aus einer Austragsschleuse 22 in einen Aufnahmebehälter 23 ausgetragen.

Über die Zufuhrleitung 4 mit einem Drosselorgan 8 und einem nachgeschalteten Pulsator 9 wird dem Behälter 1 ein gasförmiges Medium, beispielsweise ein Inertgas, pulsierend zugeführt, so daß das Schüttgut je nach den Temperaturverhältnissen entweder aufgeheizt oder abgekühlt wird, und zwar wegen der pulsierenden Gasmenge besonders rasch. Auch hier gilt die Vorschrift, daß durch Regelung der Pulsationsfrequenz über den Druckfühler P und die Steuerschaltung 13 in der Längenmitte M bei L/2 eine stehende Welle mit einer Antinode aufgebaut wird und daß sich die Druckstöße nicht rückwärts über die Zufuhrleitung 4 fortpflanzen können. Der Behälter 1 wird ständig unter einem unteratmosphärischen Druck gehalten, um Gasaustritte zu vermeiden. Das gasförmige Medium verläßt den Behälter 1 über eine Abfuhrleitung 24. Trotz der Gaspulsation wird der Staubaustrag aus dem Behälter 1 verringert.

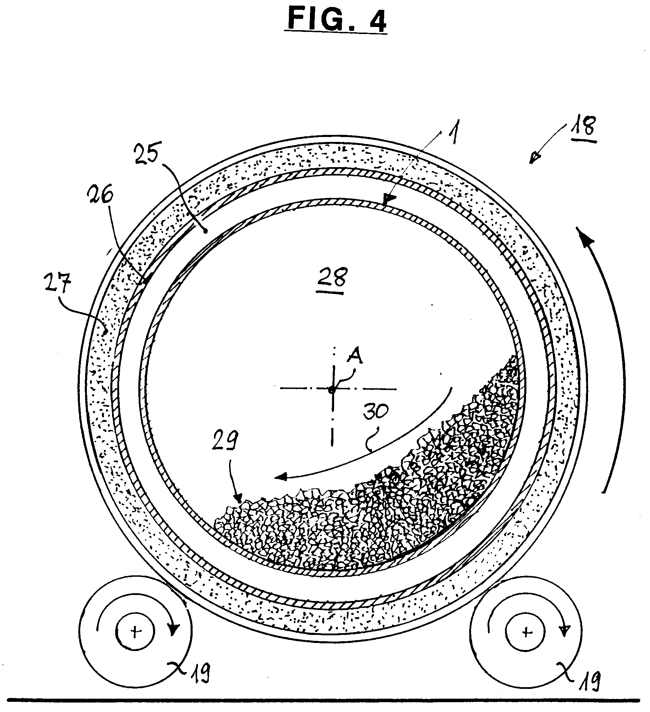

In Figur 4 wird die sehr schematische Darstellung von Figur 3 ergänzt. Der Behälter 1 ist unter Belassung eines Ringspalts 25 von einem Heizmantel 26 umgeben, der wiederum von einer Wärmedämmung 27 umhüllt ist. Dem Ringspalt 25 wird laufend ein Heizgas zugeführt, durch das über die Behälterwand im Innenraum 28 eine vorgebbare Prozeßtemperatur eingestellt wird. Der Drehrohrofen 18 hat dadurch die Funktion eines Rekuperators, Das trockene oder getrocknete Schüttgut 29, im vorliegenden Falle körnige, kontaminierte Aktivkohle, wird durch die Behälterdrehung auf den Rollen 19 um die Achse A ständig umgewälzt, was durch den Pfeil 30 angedeutet ist. Gleichzeitig wird das Schüttgut 29 kontinuierlich in Richtung der Drehachse A durch den Behälter bewegt. Hierdurch kommen ständig Partikel aus der Tiefe der Schüttung an die Oberfläche und werden dem inerten Prozeßgas ausgesetzt, das unter einem Druck steht, der geringfügig unter dem Atmosphärendruck liegt. Unter dem Einfluß einer entsprechend hoch gewählten Temperatur wird die Aktivkohle dekontaminiert, was - für sich genommen bekannt ist.

Einerseits wird das Schüttgut durch Berührung mit dem Behälter 1 durch Kontakt aufgeheizt, andererseits aber auch durch die im Innenraum 28 herrschende Gasatmosphäre, das sogenannte Prozeßgas, wenn die Partikel sich an der Oberfläche oder in deren Nähe befinden. Hier kommt nun die Erfindung ganz besonders gut zum Tragen: Durch die ständige Pulsation des Prozeßgases wird nicht nur dessen konvektiver Wärmeaustausch mit der vom Schüttgut freien Behälterinnenfläche erheblich verbessert, sondern auch der direkte Wärmeaustausch zwischen dem Prozeßgas und dem Schüttgut, d.h., die Trägerfunktion des Prozeßgases zwischen der Behälterwand und dem Schüttgut wird deutlich verbessert.

Hinzu kommt die "Tiefenwirkung" des Prozeßgases durch die Pulsationen, da nämlich das Prozeßgas durch die Pulsationen besser in die Freiräume zwischen den Partikeln in das Schüttgut eindringt und somit auch Partikel erreicht, die für einige Zeit weder mit der Behälter in Berührung kommen, noch die freie Oberfläche der Schüttung erreichen.

Beachtlich ist hierbei ferner, daß nur ganz geringe Gasmengen benötigt werden, nämlich nur solche Gasmengen, die zum Abtransport der bei der thermischen Behandlung freigesetzten Schadstoffe benötigt werden. Dies wirkt einer Staubbildung und Staubverschleppung entgegen. Es genügt, z.B., dem mittleren Prozeßdruck Druckimpulse von nur 0,1 bis 1,0 mbar zu überlagern.

Die Erfindung beruht somit auf einem Synergismus aller vorstehend beschriebenen Faktoren, wie er beim Stande der Technik nicht zu finden ist. Dies führt im Ergebnis dazu, daß die Zeit bis zum Erreichen der jeweils vorgeschriebenen Prozeßtemperatur stark verkürzt wird, so daß entweder eine kürzere Baulänge des Behälters 1 erreicht oder bei gleicher Baulänge eine längere Verweilzeit des Schüttguts im Bereich der Prozeßtemperatur erreicht wird, was z.B. den Prozeß einer Dekontamination bei gleicher Prozeßdauer verbessert. Das zugeführte Prozeßgas kann heiß (z.B. durch Wärmerückgewinnung, vorgeheizt) oder kalt sein. In beiden Fällen wird es im Behälter 1 durch die beschriebenen Maßnahmen sehr schnell auf die erforderliche Prozeßtemperatur gebracht.

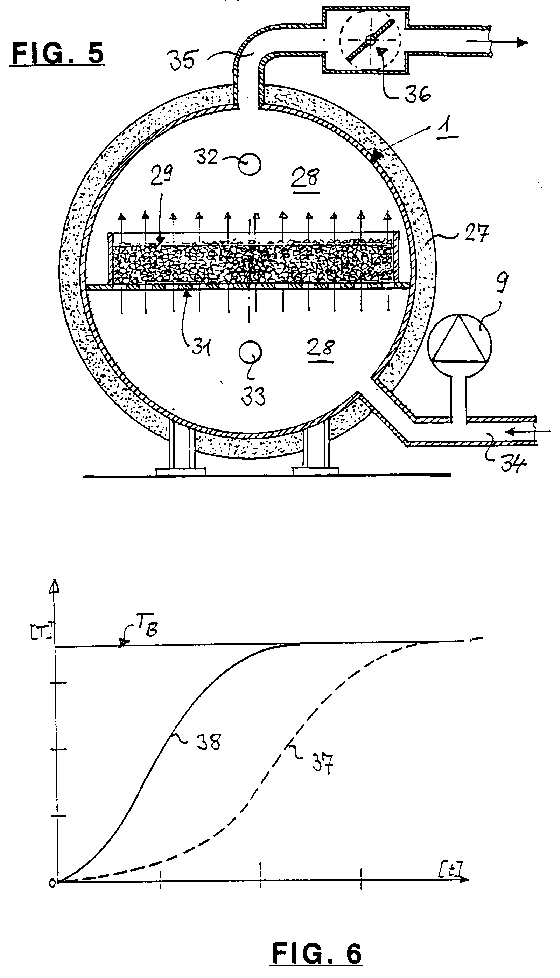

Figur 5 zeigt nun eine Anlage für einen stationären bzw. chargenweisen Betrieb. In dem Behälter 1, der gleichfalls von einer Wärmedämmung 27 umhüllt ist, befindet sich ein Siebboden 31, auf dem sich das Schüttgut 29 befindet. Im Behälterinnenraum 28 befinden sich oberhalb und unterhalb des Siebbodens 31 bzw. der Schüttung 29 Heizkörper 32 und 33, die als elektrische Heizkörper ausgeführt sein können. Auch können jeweils mehrere Heizkörper auf einer oder beiden Seiten des Siebbodens 31 angeordnet sein. Es handelt sich mithin um eine Innenbeheizung, die besonders wirksam ist und auch auf die Vorrichtung nach den Figuren 3 und 4 übertragen werden kann. Die Oberseite des Schüttguts 29 wird durch den oberen Heizkörper 32 beheizt, die Unterseite des Siebbodens 31 durch den unteren Heizkörper 33, und zwar sowohl durch Strahlung, deren Anteil bei höheren Temperaturen zunimmt, als auch durch die bereits beschriebene pulsierende Konvektion.

Durch eine Zufuhrleitung 34 wird innerhalb einer Charge kontinuierlich Prozeßgas zugeführt und durch den Pulsator 8, der als Druckimpulsgeber ausgeführt ist, in Pulsationen versetzt. Alternativ kann in einer Abfuhrleitung eine langsam, z.B. mit 1 Hz, rotierende Drossel- oder Sperrklappe 36 angeordnet sein, die die Abfuhrleitung 35 alternierend sperrt oder freigibt. Dazwischen durchströmt das Prozeßgas den Behälterinnenraum 28 und die Schüttung 29 in Richtung der Pfeile und gerät hierbei auch in intensive und pulsierende Wechselwirkung mit den Heizkörpern 32 und 33 und danach wieder mit dem Schüttgut. Hierbei geht durch die Innenbeheizung und die Wärmedämmung 27 kaum Wärme verloren. Die Behälterwand heizt sich entsprechend auf und reflektiert die Strahlung auf das Schüttgut 29 und auf den Siebboden 31. Bezüglich des synergistischen Effekts aller Einflußgrößen wird auf die Ausführungen zu den Figuren 3 und 4 verwiesen.

Dieser Synergismus wird anhand der Figur 6 deutlich, in der in maßstabslosen Einheiten auf der Abszisse die Prozeßzeit "t" und auf der Ordinate die Temperatur "T" aufgetragen sind. Die zu erreichende und durch den Prozeß vorgegebene Behandlungstemperatur "T_{B}" ist als Grenztemperatur eingetragen. Dieser Grenztemperatur nähern sich die beiden Kurven 37 und 38 asymptotisch. Die Kurve 37 zeigt den Temperaturanstieg ohne Pulsationen, die Kurve 38 den Temperaturanstieg bei ansonsten gleichen Verfahrensparametern, aber mit überlagerten Pulsationen nach der Erfindung.

Dies führt erneut vor Augen, daß die Zeit bis zum Erreichen der jeweils vorgeschriebenen Prozeßtemperatur stark verkürzt wird, so daß entweder eine kürzere Verweilzeit des Schüttguts im Bereich der Prozeßtemperatur erreicht wird, oder bei gleicher Verweilzeit eine intensivere Behandlung, was z.B. den Prozeß einer Dekontamination bei gleicher Prozeßdauer verbessert. Das zugeführte Prozeßgas kann auch in diesem Falle heiß (z.B. durch Wärmerückgewinnung, vorgeheizt) oder kalt sein. In beiden Fällen wird es im Behälter 1 durch die beschriebenen Maßnahmen auf die erforderliche Prozeßtemperatur gebracht.

### Bezugszeichenliste:

- 1: Behälter
- 1a: Behälter
- 1b: Behälter
- 1c: Behälterraum
- 1d: Behälterraum
- 2: Füllkörper
- 3a: Sammelbehälter
- 3b: Sammelbehälter
- 4: Zufuhrleitung
- 5a: Leitung (Abfuhr)
- 5b: Leitung (Abfuhr)
- 5c: Abfuhrleitung
- 6: Zufuhrleitung
- 7: Abfuhrleitung
- 8: Drosselorgan
- 9: Pulsator
- 9a: Pulsator
- 9b: Pulsator
- 10a: Schnellschaltventil
- 10b: Schnellschaltventil
- 11: Rekuperativ-Wärmetauscher
- 12: Wärmetauschflächen
- 13: Steuergerät
- 14: Steuereingang
- 15: Abfuhrleitung
- 16: Zufuhrleitung
- 16a: Abfuhrleitung
- 17: Drosselorgan
- 18: Drehrohrofen
- 19: Rollen
- 20: Eintragsschleuse
- 21: Silo
- 22: Austragsschleuse
- 23: Aufnahmebehälter
- 24: Abfuhrleitung
- 25: Ringspalt
- 26: Heizmantel
- 27: Wärmedämmung
- 28: Innenraum
- 29: Schüttgut
- 30: Pfeil
- 31: Siebboden
- 32: Heizkörper
- 33: Heizkörper
- 34: Zufuhrleitung
- 35: Abfuhrleitung
- 36: Drossel- oder Sperrklappe
- 37: Kurve
- 38: Kurve
- V1 bis V10: Ventile
- P1, P2: Druckfühler

## Patentansprüche

1. Verfahren zur Verbesserung des Wärme- und/oder Stoffaustauschs in einem verfahrenstechnischen System mit einem mit einer Zufuhrleitung (4) versehenen Behälter (1, 1a, 1b), der Medien unterschiedlichen Aggregatszustandes enthält, von denen mindestens ein Medium ein fluides Medium ist, wobei dem mindestens einen fluiden Medium mittels eines Pulsators (9, 9a, 9b) Pulsationen aufgerzwungen werden, und wobei dem Pulsator (9, 9a, 9b) ein in der Zufuhrleitung (4) des fluiden Mediums zum Behälter (1, 1a, 1b) liegendes Sperrorgan (8) vorgeschaltet ist, das den Eintritt der Pulsationen in die Zufuhrleitung (4) zumindest weitgehend verhindert, **dadurch gekennzeichnet**, daß
a) die Pulsationen dem Hauptstrom des Fluids aufgezwungen werden,
b) die Pulsationsfrequenz maximal der halben Resonanzfrequenz des Systems nach Maßgabe der Raumform des Behälters (1, 1a, 1b), der Temperatur und der Eigenschaften der Medien gewählt wird und
c) die Antinode (der Schwingungsbauch) der sich ausbildenden stehenden Welle zumindest angenähert in der Behältermitte eingestellt wird.

2. Verfahren nach Anspruch 1, **dadurch gekennzeichnet**, daß die Pulsationsfrequenz so gewählt wird, daß sich im Behälter (1, 1a, 1b) kein Schwingungsknoten ausbildet.

3. Verfahren nach Anspruch 1, **dadurch gekennzeichnet**, daß die Pulsationsfrequenz zu 1/4 der Resonanzfrequenz des Systems gewählt wird.

4. Verfahren nach Anspruch 1, **dadurch gekennzeichnet**, daß als Sperrorgan (8) eine Blende verwendet wird.

5. Verfahren nach Anspruch 1, **dadurch gekennzeichnet**, daß als Sperrorgan (8) eine Düse verwendet wird.

6. Verfahren nach Anspruch 1, **dadurch gekennzeichnet**, daß als Sperrorgan (8) eine Verdrängerpumpe verwendet wird.

7. Verfahren nach Anspruch 1, **dadurch gekennzeichnet**, daß als Pulsator (9, 9a, 9b) ein Schnellschaltventil in Verbindung mit einer Druckquelle für das betreffende Fluid verwendet wird.

8. Verfahren nach Anspruch 1, **dadurch gekennzeichnet**, daß als Pulsator (9, 9a, 9b) eine Verdrängerpumpe verwendet wird.

9. Verfahren nach Anspruch 1, **dadurch gekennzeichnet**, daß als Pulsator (9, 9a, 9b) eine Verdrängerpumpe mit mindestens einem Ventil verwendet wird, das gleichzeitig als Sperrorgan (8) dient.

10. Verfahren nach Anspruch 1, **dadurch gekennzeichnet**, daß bei langgestreckten Behältern (1, 1a, 1b) der pulsierende Innendruck des Behälters (1, 1a, 1b) in dessen Längsmitte (L/2) gemessen und daß die Pulsationsfrequenz des Pulsators (9, 9a, 9b) so eingestellt wird, daß die Antinode (Schwingungsbauch) der sich ausbildenden stehenden Welle in der Längsmitte zumindest angenähert ein Maximum aufweist.

11. Verfahren nach Anspruch 1, angewendet bei einem Regenerativ-Wärmetauscher mit Füllkörpern (2) in einem stehenden Behälter (1a, 1b), **dadurch gekennzeichnet**, daß durch den Behälter (1a, 1b) zur Abkühlung der Füllkörper (2) über das Sperrorgan (8) ein Kühlfluid geführt wird, daß dem Kühlfluid im unteren Bereich des Behälters (1a, 1b) jenseits des Sperrorgans (8) Druckpulsationen zugeführt werden, bis eine ausreichende Abkühlung der Füllkörper (2) erreicht ist, daß anschließend die Zufuhr des Kühlfluids unterbrochen und die Füllkörper (2) einem Prozeßmedium zu dessen Abkühlung ausgesetzt werden.

12. Verfahren nach Anspruch 11, **dadurch gekennzeichnet**, daß ein flüssiges Kühlfluid nach Abkühlung der Füllkörper (2) abgelassen wird.

13. Verfahren nach Anspruch 11, angewendet zur Kondensation dampfförmiger Prozeßmedien.

14. Verfahren nach Anspruch 1, angewendet bei einem Rekuperativ-Wärmetauscher (11) mit Wärmeaustauschflächen (12) zwischen zwei fluiden Medien, **dadurch gekennzeichnet**, daß dem fluiden Medium auf mindestens einer Seite der Wärmeaustauschflächen (12) in Strömungsrichtung jenseits des Sperrorgans (8) Druckpulsationen aufgezwungen werden.

15. Verfahren nach Anspruch 1, angewendet bei einem Reaktor mit einem Behälter (1) für die Behandlung von Schüttgut mit einem gasförmigen fluiden Medium, **dadurch gekennzeichnet**, daß dem gasförmigen Medium jenseits des Sperrorgans (8) Druckpulsationen aufgezwungen werden.

16. Verfahren nach Anspruch 15, **dadurch gekennzeichnet**, daß bei einem Drehrohrofen (18) mit liegender Drehachse (A-A) als Reaktor das Schüttgut und das pulsiernde gasförmige Medium ständig durch den Behälter (1) hindurchgeführt werden.

17. Vorrichtung zur Durchführung des Verfahrens nach Anspruch 1, mit einem Behälter (1, 1a, 1b), mindestens einer Zufuhrleitung (4) für mindestens ein fluides Medium, mit einem Pulsator (8) für die Erzeugung von Pulsationen innerhalb des jeweiligen Mediums, und mit einem in der Zufuhrleitung (4) des fluiden Mediums zum Behälter (1, 1a, 1b) vor dem Pulsator (8) liegenden Sperrorgan (9, 9a, 9b), durch das eine Rückwirkung der Pulsationen in die Zufuhrleitung (4) zumindest weitgehend unterdrückbar ist, **dadurch gekennzeichnet**, daß
a) der Pulsator (8) im Hauptstrom des Fluids angeordnet ist,
b) dem Pulsator (8) ein Regelgerät (13) zugeordnet ist, durch das die Pulsationsfrequenz des Pulsators (8) zumindest im wesentlichen auf einen ganzzahligen Bruchteil der Resonanzfrequenz des Systems nach Maßgabe der Raumform des Behälters (1, 1a, 1b), der Dichte, Beschaffenheit und Temperatur des Behälterinhalts einregelbar ist.

18. Vorrichtung nach Anspruch 17, **dadurch gekennzeichnet**, daß an die Behältermitte ein Druckfühler (P, P1, P2) angeschlossen ist, durch den über ein Steuergerät (13) die Frequenz des Pulsators (8) in der Weise regelbar ist, daß in dem Behälter (1, 1a, 1b) eine stehende Welle mit Unterresonanzfrequenz und mit einer Antinode im wesentlichen in der Behältermitte erzeugbar ist.

19. Vorrichtung nach Anspruch 17, ausgebildet als Regenerativ-Wärmetauscher mit einem Behälter (1a, 1b) mit Füllkörpern (2), mit einer ersten Zufuhrleitung (4) und mit einer ersten Abfuhrleitung (5c) für ein Kühlfluid, mit einer zweiten Zufuhrleitung (6) für ein zu kühlendes Prozeßmedium und mit einer zweiten Abfuhrleitung (7) für das abgekühlte Prozeßmedium, **dadurch gekennzeichnet**, daß in der ersten Zufuhrleitung (4) für das Kühlfluid ein Sperrorgan (8) und in Strömungsrichtung jenseits des Sperrorgans (8) ein Pulsator (9a, 9b) angeordnet ist, durch den das Kühlfluid im Behälter (1a, 1b) periodischen Pulsationen aussetzbar ist.

20. Vorrichtung nach Anspruch 17, ausgebildet als Rekuperativ-Wärmetauscher (11) mit Wärmeaustauschflächen (12) zwischen zwei Behälterräumen (1c, 1d) für jeweils ein fluides Medium und mit Zufuhrleitungen (4, 16) und Abfuhrleitungen (15, 16a) für jeweils einer der fluiden Medien, **dadurch gekennzeichnet**, daß in mindestens einer der Zufuhrleitungen (4, 16) ein Sperrorgan (8) und in Strömungsrichtung jenseits des Sperrorgans (8) ein Pulsator (9) angeordnet ist, durch den das fluide Medium innerhalb des Behälters (1) periodischen Pulsationen aussetzbar ist.

21. Vorrichtung nach Anspruch 17, ausgebildet als Reaktor mit einem Behälter (1) für die Behandlung von Schüttgut mit einem gasförmigen fluiden Medium, mit je einer Zufuhrleitung (4) und einer Abfuhrleitung (24) für das gasförmige Medium, **dadurch gekennzeichnet**, daß in der Zufuhrleitung (4) ein Sperrorgan (8) und in Strömungsrichtung jenseits des Sperrorgans (8) ein Pulsator (9) angeordnet ist, durch den das fluide Medium innerhalb des Behälters (1) periodischen Pulsationen aussetzbar ist.

22. Vorrichtung nach Anspruch 21, **dadurch gekennzeichnet**, daß der Reaktor als Drehrohrofen (18) ausgebildet und mit je einer Zufuhrleitung (4) und einer Abfuhrleitung (24) für die kontinuierlich Durchleitung des Schüttguts durch den Behälter (1) ausgestattet ist.

23. Vorrichtung nach Anspruch 17, **dadurch gekennzeichnet**, daß im Innenraum (28) des Behälters (1, 1a, 1b) mindestens ein Heizkörper (32, 33) angeordnet ist, durch den Heizenergie sowohl unmittelbar durch Strahlung als auch mittelbar durch pulsierende Konvektion auf den Behälterinhalt übertragbar ist.

24. Vorrichtung nach Anspruch 23, **dadurch gekennzeichnet**, daß
a) im Innenraum (28) des Behälters (1, 1a, 1b) mindestens ein Siebboden (31) angeordnet ist, auf dem sich Schüttgut (29) befindet,
b) auf einer Seite des Siebbodens (31) eine Zufuhrleitung (34) für das Prozeßgas in den Bälter (1, 1a, 1b) einmündet und auf der anderen Seite des Siebbodens (31) eine Abfuhrleitung (35) aus dem Behälter (1, 1a, 1b) herausführt,
c) auf beiden Seiten des Siebbodens (31) im Behälterinnenraum (28) mindestens je ein Heizkörper (32, 33) angeordnet ist, und daß
d) im Strömungsweg des Prozeßgases mindestens ein Pulsator aus der Gruppe Gaspumpe (9) und rotierende Sperrklappe (36) angeordnet ist.
